# EUROPEAN PATENT SPECIFICATION

(11) **EP 2 940 362 B1**
(45) Date of publication and mention of the grant of the patent: **25.04.2018**
(21) Application number: 14862375.4
(22) Date of filing: 07.11.2014
(51) Int. Cl.: F16L 25/10, F16L 37/092, F16L 21/08

(54) **BELL AND SPIGOT TYPE PIPE JOINT, MOUNTING AND DISMOUNTING METHODS THEREOF, MOUNTING CLAMP AND DISMOUNTING TOOL**
GLOCKE UND ZAPFENARTIGE ROHRVERBINDUNG, MONTAGE- UND DEMONTAGEVERFAHREN DAFÜR, BEFESTIGUNGSKLAMMER UND DEMONTAGEWERKZEUG
JOINT DE TUYAU À EMBOÎTEMENT, SES PROCÉDÉS DE MONTAGE ET DE DÉMONTAGE, PINCE DE MONTAGE ET OUTIL DE DÉMONTAGE

(30) Priority: 14.11.2013 CN 201310565649
(43) Date of publication of application: 04.11.2015
(73) Proprietor: Xinxing Ductile Iron Pipes Co., Ltd, Wu'an, Hebei 056300 (CN)
(72) Inventor: LI, Jun, Han Dan Hebei 056300 (CN); XU, Jun, Han Dan Hebei 056300 (CN); SHEN, Yong, Han Dan Hebei 056300 (CN); LIU, Junfeng, Han Dan Hebei 056300 (CN); LIU, Yanxue, Han Dan Hebei 056300 (CN); LI, Haishun, Han Dan Hebei 056300 (CN); ZHANG, Yongjie, Han Dan Hebei 056300 (CN); GUO, Hongxing, Han Dan Hebei 056300 (CN); ZUO, Chao, Han Dan Hebei 056300 (CN)
(74) Representative: Gulde & Partner
(86) International application number: PCT/CN2014/090545
(87) International publication number: WO 2015/070729

(56) References cited:
- WO-A1-96/07829
- WO-A1-98/10211
- WO-A1-2013/020258
- CN-A- 101 994 887
- CN-A- 102 297 297
- CN-U- 202 914 936
- GB-A- 2 291 484
- US-A- 4 685 708
- US-A1- 2011 248 496
- US-A1- 2011 291 409
- US-A1- 2012 025 524

## Description

### Field of the Invention

The invention relates to a spigot-and-socket pipe joint, particularly to a spigot-and-socket pipe joint for a nodular cast iron pipe with an anchor structure formed by split-type stoppers.

### Background of the Invention

A spigot-and-socket pipe joint with an anchor structure formed by split-type stoppers has simple structure, convenient installation and broad application in the fields of municipal engineering, oil transferring, gas transferring and the like. The spigot-and-socket pipe joint with the anchor structure which is in the form of stoppers (or the similar components) is popular to numerous users because of construction convenience and less falling off. Such joint typically includes a socket and a spigot. A projection is formed on the spigot. After the spigot is inserted into the socket, a stopper is inserted through a stopper mounting hole. The disengaging of the spigot and the socket is prevented by anchoring the spigot in the socket by means of the stopper. Within this kind of joint, the stopper is a significant guarantee for the reliable connection of the joint. Once the stopper is dropped out, the connectivity of the joint is damaged even causing the spigot to be disengaged from the socket. Accordingly, how to avoid the disengaging of the stopper during the installation and the use of the joint is a significant technical problem concerned by those skilled in the art.

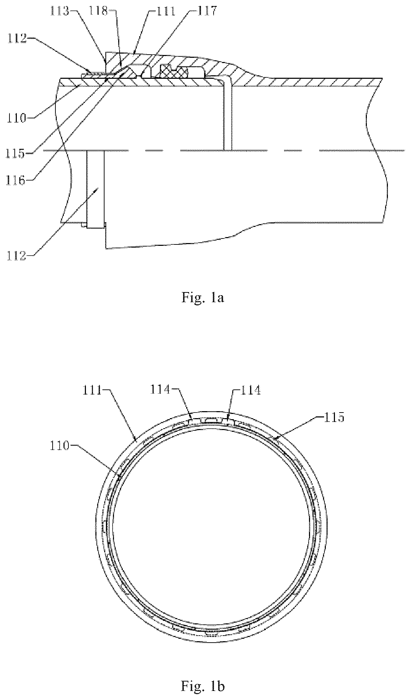

Illustrated in Fig. 1a and 1b is a conventional spigot-and-socket pipe joint, in which an annular wall 113 extending radially inwards is provided at an end of a socket 111, stopper mounting grooves 114 are provided in the annular wall 113, bosses 117 are provided on a spigot 110, anchor elements are stoppers 115 and anti-slip bosses 116 are provided on the stoppers 115. The spigot 110 is inserted into the socket 111. The anti-slip boss 116 on the stopper 115 is installed in alignment with the stopper mounting groove 114 and the stopper 115 is rotated along the pipe circumference of the spigot 110. The anti-slip boss 116 on the stopper 115 is located behind the annular wall 113 then the next stopper 115 is installed. After all the stoppers 115 are installed, the stoppers 115 are tightly hooped on the outer pipe wall of the spigot 110 by a steel strip 112 or other locking members. When the spigot 110 is subjected to outwards pullout force, the bosses 117 on the spigot 110 act on the right end surface of the stoppers 115 and the anti-slip bosses 116 on the stoppers 115 act on an axial inner incline 118 of the annular wall 113 of the socket 111, thereby preventing the spigot 110 from slipping. Although this kind of spigot-and-socket pipe joint has been proved to be successful in practical application, there are still some shortcomings. For example, the steps of fixing the stoppers are relatively complicated in that the stoppers are required to be bunched by the steel strip after installed, thus increasing the installation steps. Meanwhile, the spigot is moved along the axial direction by external force, causing the steel strip used to fix the stoppers to loose even break due to multiple axial movements; besides, the steel strip and other locking members directly contact with the external environment and are prone to be corroded and invalidated by the environment influence, thereby losing the locking function and causing the stoppers to be dropped out; furthermore, the cost of the steel strip is relatively high.

Another conventional spigot-and-socket pipe joint is disclosed in the patent document US4685708A, as shown in Fig. 2a - 2c. Stoppers 30' are arc and connected by means of pins 34' into an annular stopper ring 24'. A plate 36' and a plate 38' of a regulating device 26' are respectively provided at the end 30c' of one stopper 30' and the corresponding opposite end of another stopper 30'. The assembled stopper ring 24' is positioned in a stopper chamber 22' by connecting the plate 36' and the plate 38', and the inner diameter of the stopper ring 24' is greater than the outer diameter of the welding ring 28' on a spigot 10' so that the welding ring 28' smoothly passes over the stopper ring 24'. After the welding ring 28' passes over the stopper ring 24', the stopper ring 24' is fixed on the outer surface of the spigot 10' by regulating the distance between the two ends 30c', 30d' by means of the regulating device 26' to prevent the spigot 10' from dropping out of the socket 12'. This kind of spigot-and-socket pipe joint does not use the steel strip to fix the stoppers 30', but it is required to connect the stoppers 30' by pins 34' and fix the stopper ring 24' with the regulating device 26'. The regulating device 26' is not only connected with the stoppers 30' but also provided with a bolt 42', bases 40', 44', a nut 46' and the like. Thus the stopper ring and the component structure for fixing the stopper ring are both complex and the installation steps are tedious. Meanwhile, the regulating device 26' for fixing the stopper ring is in the external environment and is also prone to environment corrosion, so that the joint loses the self-locking function.

A spigot-and-socket pipe joint with an anchor structure is disclosed in patent CN102297297A filed by the present applicant, as shown in Fig. 3a and 3b. A stopper 5' is provided with two sets of an anti-slip boss each comprising two anti-slip bosses 6', a fixing hole 11' is provided in the stopper 5' between the two anti-slip bosses 6 and a rubber block 12' is fixedly installed on the stopper 5'. When the stopper 5' is installed between the socket 1' and the spigot 10', the rubber block 12' is pressed by the inner surface of the socket 1', so that the rubber block 12' is deformed. The force generated by the compression deformation of the rubber block 12' forces the stopper 12' against the outer surface of the spigot 10', so as to prevent the stopper 5' from moving and dropping out. The spigot-and-socket pipe joint does not need the steel strip for fixing the stopper, at the same time, the rubber block is completely hidden in the space between the socket and the spigot without contacting with the external environment, so that unexpected hurt during the installation and the external environment corrosion can be avoided, which significantly prolongs the service life of the spigot-and-socket pipe joint. However, the aforementioned spigot-and-socket pipe joint still has some shortcomings such as the complex structures of the stopper and the rubber block, complex construction, as well as the incomplete annular structure of the socket and the reduced strength inevitably caused by the presence of the stopper on the socket, which limits the application of this kind of spigot-and-socket structure.

Ideally, the center of the stopper ring is located at the axis of a pipe and the spigot is installed in the coaxial direction. In prior art, however, every type of the joint formed by first installing the stopper ring in the stopper chamber and then installing the spigot into the socket has one typical problem that the stopper ring would drop towards the rear lower part of the stopper chamber by gravity after being installed into the stopper chamber, so the center thereof would deviate from the axis of the pipe, thus making it difficult to install the spigot. A spigot-and-socket pipe joint including a socket, a spigot, and a stopper ring for attaching a pipe to a wall is also disclosed in patent document CN202914936U.

### Summary of the Invention

In order to overcome the shortcomings in prior art, a spigot-and-socket pipe joint is provided in the invention which is simple in structure and convenient to install, effectively prevents the stoppers from slipping and has firm and reliable connection.

A spigot-and-socket pipe joint disclosed in the invention includes a socket, a spigot and a stopper ring. The end of the socket extends radially inwards to form a complete annular wall. A spigot projection is provided at the end of the spigot. The stopper ring has a split structure comprising a plurality of stoppers and a plurality of elastic supports. The stopper is provided with a fixing hole in which the elastic support is fixedly installed. The total height of the elastic support and the stopper is equal to or slightly greater than the difference between the inner diameter of the socket and the outer diameter of the spigot.

In the spigot-and-socket pipe joint of the invention, the stopper is shaped as an arc rod and radically inwards formed as a guiding incline at the outer end. The arc rod of the stopper is provided with a groove at the bottom of which the fixing hole is located.

In the technical solution of the invention, the structure of the stopper is simple since the stopper ring has a split structure consisting of a plurality of stoppers which do not need to be connected together by connecting components. To secure the stopper is an elastic support which is provided in a stopper chamber with the stopper after being fixed on the stopper, thus the elastic support is between the socket and the spigot without contacting with the external environment so that scratch during the installation and the external environment corrosion to the elastic support can be avoided, which prolongs the service life. Meanwhile, the stopper is first installed in the stopper chamber and the socket is inserted into the spigot so that there is no need to provide a stopper mounting groove in the annular wall radically inwards extended at the end of the socket, making the annular wall complete and increasing the connection strength of the joint.

Furthermore, the diameter of the stopper ring is smaller than the stopper chamber, when the stopper ring is placed in the stopper chamber, the stopper ring falls to the lower part of the stopper chamber without installing the elastic support and separated from the stopper chamber around, thus, the force gathering the stoppers together to form the stopper ring is missing, so that the stoppers forming the stopper ring easily drop out or the center of the stopper ring deviates from the axis, therefore the spigot is difficult to be installed and even not to be installed into the socket. After the elastic support is installed on the stopper, because of its elasticity, the elastic support acts between the inner wall of the stopper chamber and the stopper, supports and fixes the stopper ring and provides the force keeping the stoppers together when the stopper is put into the stopper chamber. Thus, the stoppers would not drop out, which ensures the perfection of the structure and the shape of the stopper ring so as to facilitate the installation of the spigot.

In the spigot-and-socket pipe joint according to the invention, the sum of the arc length of a plurality of stoppers is equal to or slightly smaller than the circumference of the spigot.

In the spigot-and-socket pipe joint according to the invention, the portion of the elastic support inserted into the fixing hole is a cylindrical base with a plurality of annular projections. The annular projection acts to fix the elastic support and the upper exposed portion of the elastic support has various shapes (e.g. cylindrical shape, rectangle, polygon and the like) which can act to support the stopper as well can be compressed in the presence of an external force and return to the original shape after the external force is eliminated. In general, the elastic support has a simple structure and is easy to manufacture.

The stoppers in the invention can selectively be two or three. The choice of two or three stoppers can facilitate the installation of the stoppers in place in the stopper chamber and the formation of the stopper ring in a complete shape, and the stoppers can be pressed each other for temporarily keeping the stopper ring in the stable state.

Moreover, an installation and disassembly method of the spigot-and-socket pipe joint is also provided in the invention, comprising the following specific installation steps:
a, cleaning a socket of a pipe, installing a seal rubber ring and applying a lubricant to the seal rubber ring;
b, installing stoppers of a split-type stopper ring into a stopper chamber one by one to form a whole;
c, inserting a spigot into the socket;
d, during the installation, because a spigot projection can push the stopper ring to move upwards and backwards and compress an elastic support on the stopper ring when passing through the stopper ring, after the spigot projection passes through the stopper ring along a guiding incline, slightly pulling the spigot outwards, so that the stopper presses against the outer surface of the spigot by the elastic support and acts to anchor the joint.

Preferably, an installation method as below can be utilized to improve the installation efficiency, which comprising the following steps:
a, cleaning a socket of a pipe, installing a seal rubber ring and applying a lubricant to the seal rubber ring;
b, installing stoppers of a split-type stopper ring into a stopper chamber one by one and providing an installation fixture between any two stoppers to form a whole stopper ring;
c, inserting a spigot into the socket and disassembling the installation fixture once an end of the spigot enters the stopper ring;
d, during the installation, because a spigot projection can push the stopper ring to move upwards and backwards and compress an elastic support on the stopper ring when passing through the stopper ring, getting the spigot projection through the stopper ring along a guiding incline, so that the stopper presses against the outer surface of the spigot by the elastic support and acts to anchor the joint.

In the forgoing installation method, as long as the stoppers of the split-type stopper ring are installed into the stopper chamber one by one to form a whole, and the spigot is inserted into the socket, the method is easy in installation and convenient to operate, greatly reduces the period and the operation difficulty and has a vast market prospect.

Since the stopper ring is molded as a whole and cut into segments, and the outer diameter of the spigot of the cast pipe has certain tolerance at the same time, it appears that the inner diameter of a part of the stopper ring is smaller than the outer diameter of the spigot. In this case, an auxiliary installation fixture having a U-shaped overall structure is provided in the invention, in which the lower portion is slightly longer than the upper portion and the connection portion vertically connects the upper portion with the lower portion. In use, the installation fixture butts the wall of the end of the socket to locate the upper portion above the wall and the lower portion below the wall, and eventually attaches the connection portion to the wall of the end of the socket. At this time, the lower portion is located between any two stoppers to assist a plurality of split stoppers in forming a whole stopper ring with increased inner diameter for simply and quickly inserting the spigot into the socket.

Meanwhile, in order to facilitate the disassembly of the joint, an auxiliary disassembly tool is provided in the invention. The disassembly tool is an elongated steel sheet, one end of which is a bending head. The terminal end of the bending head is a conical end with two small fillets at the corner thereof.

The specific disassembly method is as follows:
a, pushing a spigot by an external force to move a projection of the spigot towards the sealing position of a socket until the spigot projection is completely pushed into a groove in the plane D3 of the socket;
b, inserting the disassembly tool between two split stoppers to move the stopper towards the inside of the socket, when the stopper contacts the bottom vertical plane of a stopper chamber of the socket, the stopper can not axially move any more, with the insertion of the disassembly tool,
the gap between two split stoppers is enlarged and the inner diameter of the stopper ring is increased as well;
c, once the inner diameter of the stopper ring disables the spigot projection of the spigot from pulling out, requiring to insert multiple disassembly tools between the split stoppers until the spigot can be smoothly pulled out of the socket.
d, after the spigot is pulled out, removing the disassembly tool and then removing the split stopper and a seal rubber ring from the socket one by one to eventually disassemble all accessories.

The spigot-and-socket pipe joint with the anchor structure provided in the invention is simple in structure, convenient and fast to install and disassemble, strong in anti-slip capability and good in effect by providing the elastic supports to fix the stoppers.

### Brief Description of the Drawings

Fig.1a is a section view of a spigot-and-socket pipe joint in prior art;
Fig.1b is a left view of the spigot-and-socket pipe joint in prior art;

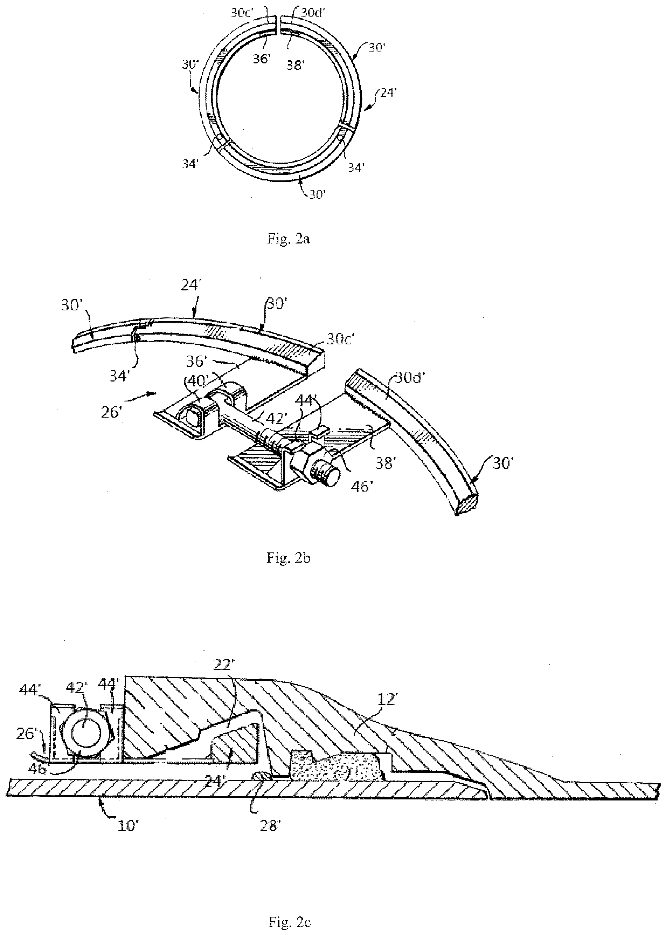

Fig. 2a is a perspective view of a stopper ring in prior art;
Fig. 2b is a perspective view of a regulating device of the stopper ring in prior art;
Fig. 2c is a section view of installation of a spigot in prior art;

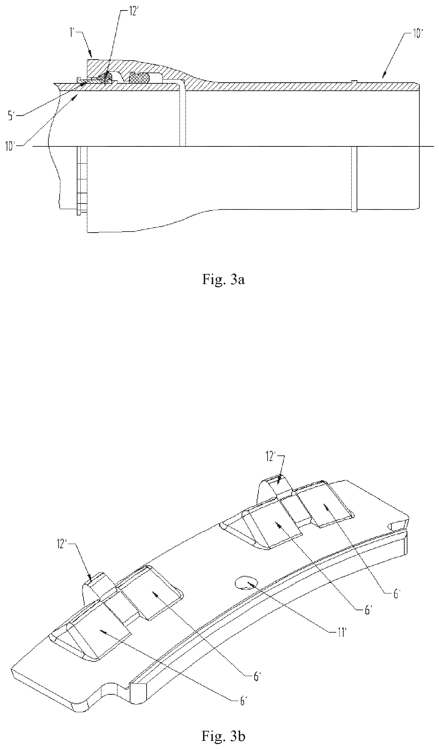

Fig. 3a is a front section view of the spigot-and-socket pipe joint in prior art;
Fig. 3b is a perspective view of a stopper in prior art;
Fig. 4 is a partial section view of a spigot-and-socket pipe joint according to the invention;
Fig. 5 is an enlarged schematic of the partial structure of the spigot-and-socket pipe joint according to the invention;
Fig. 6a is a structure drawing of a stopper ring of the spigot-and-socket pipe joint according to the invention;
Fig. 6b is the section view taken along the line B-B of Fig. 6a;
Fig. 7 is a perspective view of an elastic support according to the invention;
Fig. 8a is a structure drawing of the spigot-and-socket pipe joint with the stopper ring inserted into the elastic support according to the invention;
Fig. 8b is the section view taken along the line A-A of Fig. 8a;
Fig. 9a is a structure drawing of an installation fixture in place according to the invention;
Fig. 9b is the section view taken along the line A-A of Fig. 9a;
Fig. 10 is a perspective view showing the relationship between the installation fixture and the stopper ring according to the invention;
Fig. 11 is a partial section view showing the socket with the installation fixture in place according to the invention;
Fig. 12 is a perspective view of the installation fixture according to the invention;
Fig. 13 is a perspective view showing the relationship between a disassembly tool and the stopper ring according to a disassembly method of the spigot-and-socket pipe joint of the invention;
Fig. 14 is a partial section view showing the socket with the installation fixture in place according to the disassembly method of the spigot-and-socket pipe joint of the invention;
Fig. 15 is a perspective view of a disassembly tool according to the invention.

### Detailed Description of the Invention

Explanation of the reference numbers: 1 stopper, 2 stopper ring, 3 groove, 4 fixing hole, 5 elastic support, 51 upper base, 52 projection, 53 fixing post, 6 annular wall, 7 stopper chamber, 8 spigot, 81 spigot projection, 9 socket, 91 groove in plane D3 of the socket, 10 rubber ring, 11 guiding incline, 12 installation fixture, 13 upper portion, 14 lower portion, 15 connection portion, 16 disassembly tool, 17 bending head, 18 conical face, 19 small fillet

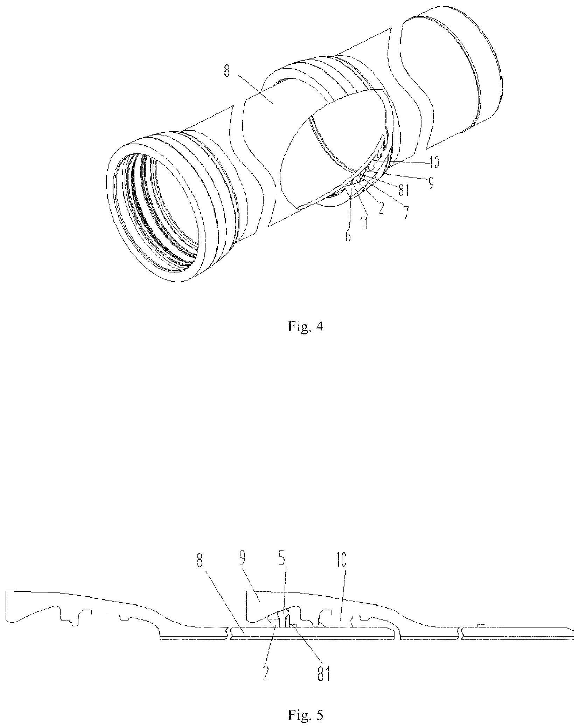

As shown in Fig.4 and Fig.5, in the spigot-and-socket pipe joint according to the invention, one end of a section of a pipe is a socket 9, and the other end thereof is a spigot 8. An end of the socket 9 is provided with an annular wall 6 radially inwards extending, in which an installing hole for installing a stopper 1 is not provided so that it is a complete wall. A spigot projection 81 is provided in the spigot 8 and a stopper chamber 7 for accommodating the stopper 1 is provided in the inner surface of the socket 9.

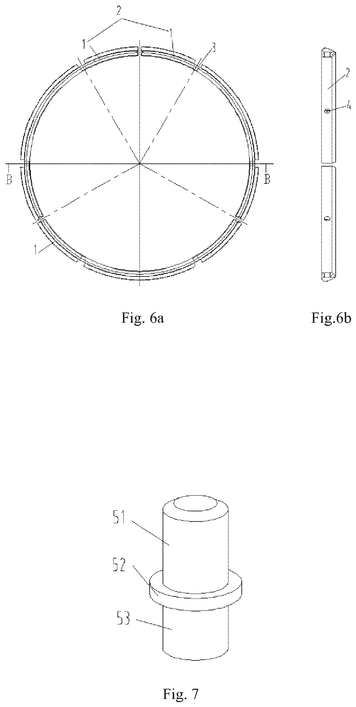

As shown in Fig.6a and Fig.6b, a stopper ring 2 has a split structure including three stoppers 1 with the same structure, and the three stoppers can form an annular whole, that is the stopper ring 2. Of course, the number of the stoppers 1 can be set according to the specific demands, and the choice of three stoppers to form the stopper ring 2 is the best embodiment. In this case, the stoppers 1 can be easily installed in the stopper chamber 7 and temporally form a more stable stopper ring combination without connecting and fixing the stoppers together. The stopper 1 is an arc rod at the outward end of which radially inwards formed with a guiding incline 11. Two grooves 3 are provided in the stopper 1 along the arc, the bottom of the groove 3 is generally parallel to the axis of the stopper ring 2 and a fixing hole 4 for fixing a rubber support 5 is provided in the bottom of the groove 3.

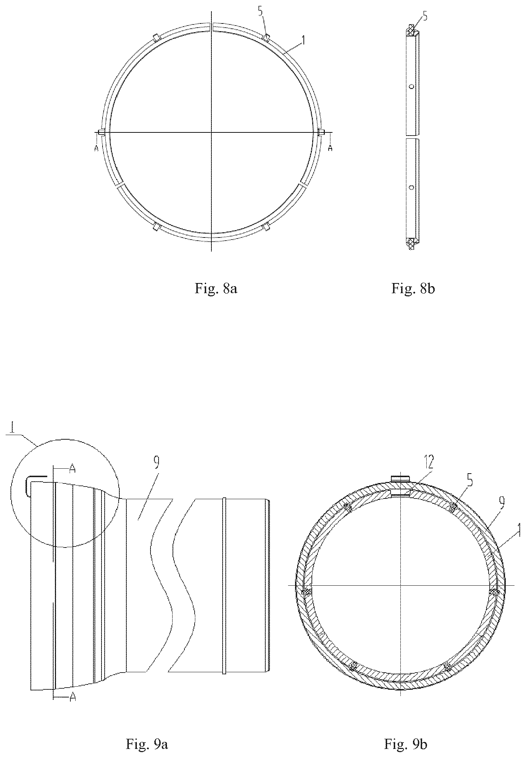

The elastic support 5 can be made of elastic material such as rubber, plastic or nylon etc. As shown in Fig. 7, the elastic support 5 has an upper base 51, a projection 52 is formed on the upper base 51 and the portion of the upper base 51 below the projection 52 is a fixing post 53. The projection 52 radially extends beyond the surfaces of the upper base 51 and the fixing post 53. The shape, the size and the location of the fixing post 53 correspond to that of the fixing hole 4 provided in the face of the outer diameter of the stopper. After the fixing post 53 of the elastic support 5 is inserted and fixed in the fixing hole 4 of the stopper, the lower end face of the projection 52 is close to the bottom of the groove 3. Thus, the projection 52 enlarges the contact area between the elastic support 5 and the bottom of the groove 3. When the elastic support 5 deforms under pressure, the projection 52 prevents the elastic support 5 from destabilizing and collapsing in virtue of the pressure. The state of fixing the elastic support 5 into the stopper 1 is shown in Fig. 8a and Fig. 8b. After the step of installing the spigot 8 into the socket 9, the elastic support 5 would apply radially inward force to the stopper 1 so as to firmly attach the stopper 1 to the outer surface of the spigot 8.

Providing the elastic support 5 can help the stopper ring 2 to locate and center, making it easier to install the spigot 8 into the socket 9. Since a usual stopper ring is not provided with the support like the elastic support 5, the center of the stopper ring is certainly lower than the axis of the pipe by gravity after a complete stopper ring or the stopper ring combined by a plurality of stoppers in a certain way is placed into the stopper chamber 7 of the socket as a whole, therefore the tolerance is further enlarged. When the tolerance increases to a certain degree, it is not easy to insert the spigot into the socket and keep in place, that is, the spigot projection on the upper part of the spigot is easily stopped by the upper portion of the stopper ring and prevents the spigot from being smoothly inserted into the socket. In this case, the stopper ring is usually returned under the action of an auxiliary tool as much as possible so that it is likely to insert the spigot into the socket. Because the foregoing stopper ring 2 is provided with the elastic support 5, the tolerance is significantly reduced and the center of the stopper ring is generally located near the axis of the pipe. In such a way, the spigot projection can smoothly pass through the stopper ring 2 along the guiding incline 11 only by applying a little force to the spigot, so that the installation is more convenient.

The installation steps of the spigot-and-socket pipe joint of the invention comprises:
First, preparing stoppers 1 and a pipe (one end of the pipe is a socket 9 and the other end is a spigot 8), cleaning contaminants in the socket 9, installing a rubber ring 10 functioning as a seal and applying lubricant to the rubber ring 10;
Second, fixing an elastic support 5 to a fixing hole 4 in the stopper 1, then installing the stoppers 1 of the split stopper ring 2 in a stopper chamber 7 located in the socket one by one to form an annular whole as shown in Fig. 8a and Fig. 8b;
Third, installing the spigot 8 into the socket 9;
Fourth, during the installation, because a spigot projection 81 can push the stopper 1 to move upwards and backwards and compress the elastic support 5 on the stopper 1 when passing through the stopper ring 2, after the spigot projection 81 passes through the stopper ring 2 by virtue of a guiding incline 11, pressing the stopper 1 against the outer surface of the spigot 8 by the elastic support 5 and acting to anchor the joint.

If the inner diameter perimeter of the annular whole formed by a plurality of stoppers, i.e. the inner diameter perimeter of the stopper ring 2, is slightly smaller than the outer diameter perimeter of the spigot of the metal pipe, and the normal installation steps as above are influenced, there is need to carry out the installation described in the invention with the aid of an installation fixture, the steps of which are as follows:
First, preparing stoppers 1 and a pipe (one end of the pipe is a socket 9 and the other end is a spigot 8), cleaning contaminants in the socket 9, installing a rubber ring 10 functioning as a seal and applying lubricant to the rubber ring 10;
Second, fixing an elastic support 5 to a fixing hole 4 in the stopper 1, then installing the stoppers 1 of the split stopper ring 2 in a stopper chamber 7 located in the socket one by one and providing an installation fixture 12 between two stoppers 1 to form an annular whole, as shown in Figs. 9a-9b, 10 and 11;
Third, installing the spigot 8 into the socket 9 and disassembling the installation fixture once an end of the spigot enters the stopper ring 2;
Fourth, during the installation, because a spigot projection 81 can push the stopper 1 to move upwards and backwards and compress the elastic support 5 on the stopper 1 when passing through the stopper ring 2, after the spigot projection passes through the stopper ring 2 by virtue of a guiding incline 11, pressing the stopper 1against the outer surface of the spigot 8 by the elastic support 5 and acting to anchor the joint.

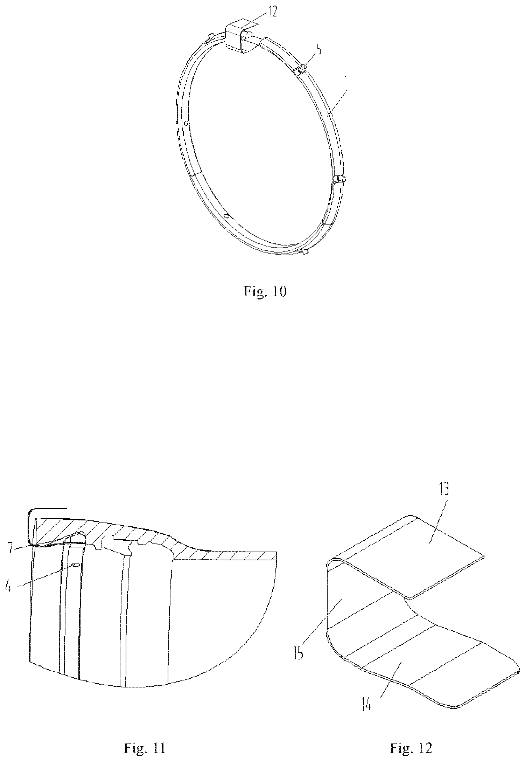

As shown in Fig. 12, the foregoing installation fixture 12 has a generally U-shape and comprises an upper portion 13, a lower portion 14 and a connection portion 15. The lower portion 14 is longer than the upper portion 13 and the connection portion 15 substantially perpendicularly connects the upper portion and the lower portion. After being in place, the installation fixture is clamped in the end wall of the socket and the lower portion thereof is clamped between any two split stoppers to assist in forming the whole stopper ring.

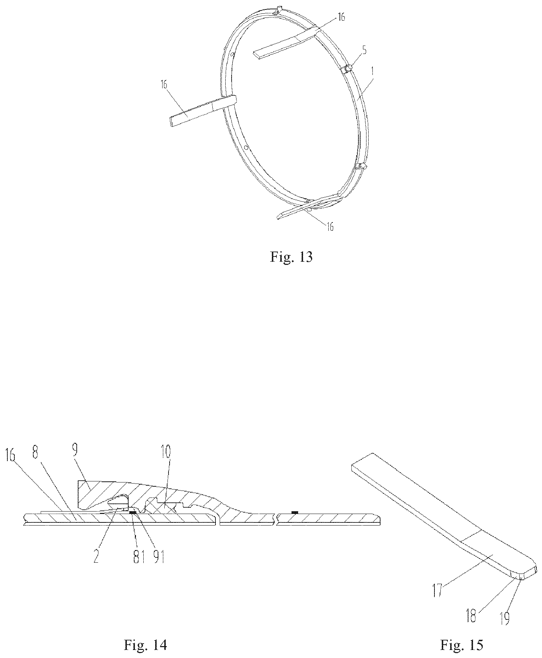

Disassembly steps of the spigot-and-socket pipe joint of the invention comprises:
First, pushing a spigot 8 by external force to move a spigot projection 81 of the spigot 8 towards the sealing position of a socket 9 until the spigot projection 81 is completely pushed into a groove 91 in the plane D3 of the socket;
Second, as shown in Fig. 13, inserting the bending head 17 of a disassembly tool 16 between two stoppers 1 in the socket 9 (if there is great resistance, hitting by a hammer) to move the stopper 1 towards the inside of the socket 9, as shown in Fig. 14, when the stopper 1 contacts the bottom vertical plane of a stopper chamber of the socket 9, the stopper 1 can not axially move any more,
with the insertion of the disassembly tool 16, the gap between two stoppers 1 is enlarged and the inner diameter of the stopper ring 2 is increased as well;
Third, once the inner diameter of the stopper ring 2 disables the spigot projection 81 from pulling out, requiring the disassembly tool 16 to be inserted again between other two adjacent stoppers 1 until the spigot 8 can be smoothly pulled out of the socket 9;
Fourth, after the spigot 8 is pulled out, removing the disassembly tool 16 and then removing all stoppers 1 and a rubber ring 10 from the socket 9 one by one to eventually disassemble all accessories.

As shown in Fig. 15, the disassembly tool 16 is an elongated steel sheet, one end of which is a bending head 17. The terminal end of the bending head 17 is a conical end 18 with two small fillets 19 at the corner thereof.

Although only two grooves 3 and two fixing holes 4 are provided in one stopper in the invention, more grooves 3 and more fixing holes 4 can be provided according to actual situation in practical use. Furthermore, for those skilled in the art, various alterations could be made to the foregoing embodiments in the scope of the technical schemes of the invention, which all will fall into the scope of the invention.

### Industrial Applicability

The spigot-and-socket pipe joint in the invention can be used for a nodular cast iron pipe, is simple in structure and convenient to install and disassemble, can effectively prevent the stoppers from slipping, and has firm and reliable connection. Thus, it has industrial applicability.

## Claims

1. A spigot-and-socket pipe joint includes a socket (9), a spigot (8) and a stopper ring (2), the end of the socket (9) extends radially inwards to form a complete annular wall (6), a stopper chamber (7) is formed in the annular wall (6), a spigot projection (81) is provided at the end surface of the spigot (8), wherein the stopper ring (2) has a split structure comprising a plurality of stoppers (1) and a plurality of elastic supports (5), wherein the total radial height of the elastic support (5) and the stopper (1) is equal to or slightly greater than the difference between the maximal inner diameter of the socket (9) and the outer diameter of the spigot (8), **characterized in that** a fixing hole (4) is provided in the radially outward surface of the stopper (1), wherein the elastic support is fixedly installed in the fixing hole (4).

2. The spigot-and-socket pipe joint according to claim 1, wherein the stopper (1) is shaped as an arc rod and radically inwards formed as a guiding incline (11) at the outer end, a groove (3) is provided in the arc rod of the stopper (1) and the fixing hole (4) is located at the bottom of the groove.

3. The spigot-and-socket pipe joint according to claim 1, wherein the sum of the arc length of a plurality of stoppers (1) is equal to or slightly smaller than the circumference of the spigot.

4. The spigot-and-socket pipe joint according to claim 2, wherein two grooves (3) are uniformly provided in each stopper (1).

5. The spigot-and-socket pipe joint according to any of claims 1-4, wherein the elastic support (5) has a fixing post (53), an upper base (51) and a projection (52) radially extending beyond the surface of the fixing post (53) between the fixing post (53) and the upper base (51).

6. The spigot-and-socket pipe joint according to any of claims 1-4, wherein the stoppers are preferably 3 or more.

7. An installation method of the spigot-and-socket pipe joint according to any of claims 1-6, comprising the following installation steps:
a, cleaning a socket (9) of a pipe, installing a seal rubber ring and applying lubricant to the seal rubber ring;
b, installing an elastic support (5) into each stopper (1) and installing the stoppers (1) in a stopper chamber (7) one by one to form a complete stopper ring (2);
c, installing a spigot (8) into the socket (9);
d, installing the joint in place after a spigot projection (81) passes through the stopper ring (2) along a guiding incline (11).

8. The installation method according to claim 7, **characterized in that**:
Step b includes: providing an installation fixture (12) between any two stoppers to form a complete stopper ring (2);
Step c includes: disassembling the installation fixture (12) once an end of the spigot enters the stopper ring (2).

9. A disassembly method of the spigot-and-socket pipe joint according to any of claims 1-6 comprise the following disassembly steps:
a, pushing a spigot (8) by external force to move a spigot projection (8) of the spigot (8) towards the sealing position of a socket (9) until the spigot projection (81) is completely pushed into a groove (91) in the plane D3 of the socket,
b, inserting a disassembly tool (16) between two stoppers (1) in the socket (9) to move the stopper (1) towards the inside of the socket (9), the gap between two stoppers (1) being enlarged and the inner diameter of the stopper ring (2) being increased as well, c, once the inner diameter of the stopper ring (2) disables the spigot projection (81) of the spigot (8) from pulling out, inserting the disassembly tool (16) again between other two adjacent stoppers (1) until the spigot (8) can be smoothly pulled out of the socket (9), d, after the spigot (8) is pulled out, removing the disassembly tool (16) and then removing all stoppers (1) and a rubber ring (10) from the socket (9) one by one to eventually disassemble all accessories.

## Patentansprüche

1. Eine Zapfen- und Muffen-Rohrverbindung weist eine Muffe (9), einen Zapfen (8) und einen Anschlagring (2) auf, wobei sich das Ende der Muffe (9) radial nach innen erstreckt, um eine vollständige ringförmige Wand (6) auszubilden, wobei eine Anschlagkammer (7) in der ringförmigen Wand (6) ausgebildet ist, wobei ein Zapfenvorsprung (81) an der Endfläche des Zapfens (8) bereitgestellt wird, wobei der Anschlagring (2) eine unterteilte Struktur, die eine Vielzahl von Anschlägen (1) und eine Vielzahl von elastischen Stützen (5) aufweist, aufweist, wobei die radiale Gesamthöhe der elastischen Stütze (5) und des Anschlags (1) gleich der oder geringfügig größer als die Differenz zwischen dem größten Innendurchmesser der Muffe (9) und dem Außendurchmesser des Zapfens (8) ist, **dadurch gekennzeichnet, dass** ein Befestigungsloch (4) in der radial äußeren Oberfläche des Anschlags (1) bereitgestellt wird, wobei die elastische Stütze im Befestigungsloch (4) fest montiert ist.

2. Die Zapfen- und Muffen-Rohrverbindung nach Anspruch 1, wobei der Anschlag (1) als Bogenstange geformt ist und radikal nach innen als Führungsschräge (11) am äußeren Ende ausgebildet ist, wobei eine Nut (3) in der Bogenstange des Anschlags (1) bereitgestellt wird und das Befestigungsloch (4) auf der Unterseite der Nut angeordnet ist.

3. Die Zapfen- und Muffen-Rohrverbindung nach Anspruch 1, wobei die Summe der Bogenlänge einer Vielzahl von Anschlägen (1) gleich dem oder geringfügig kleiner als der Umfang des Zapfens ist.

4. Die Zapfen- und Muffen-Rohrverbindung nach Anspruch 2, wobei zwei Nuten (3) gleichmäßig in jedem Anschlag (1) bereitgestellt werden.

5. Die Zapfen- und Muffen-Rohrverbindung nach einem der Ansprüche 1-4, wobei die elastische Stütze (5) einen Befestigungspfosten (53), eine obere Basis (51) und einen Vorsprung (52), der sich radial über die Oberfläche des Befestigungspfostens (53) hinaus zwischen dem Befestigungspfosten (53) und der oberen Basis (51) erstreckt, aufweist.

6. Die Zapfen- und Muffen-Rohrverbindung nach einem der Ansprüche 1-4, wobei die Anschläge vorzugsweise 3 oder mehr sind.

7. Ein Verfahren zur Montage der Zapfen- und Muffen-Rohrverbindung nach einem der Ansprüche 1-6, aufweisend die folgenden Montageschritte:
a) Reinigen einer Muffe (9) eines Rohrs, Montieren eines Gummidichtungsrings und Aufbringen von Schmiermittel auf den Gummidichtungsring;
b, Montieren einer elastischen Stütze (5) in jeden Anschlag (1) und Montieren der Anschläge (1) nacheinander in einer Anschlagkammer (7), um einen vollständigen Anschlagring (2) auszubilden;
c, Montieren eines Zapfens (8) in die Muffe (9);
d, festes Montieren der Verbindung, nachdem ein Zapfenvorsprung (81) entlang einer Führungsschräge (11) durch den Anschlagring (2) hindurch ging.

8. Das Montageverfahren nach Anspruch 7, **dadurch gekennzeichnet, dass**:
Schritt b aufweist: Bereitstellen einer Montagebefestigungsvorrichtung (12) zwischen jeweils zwei Anschlägen, um einen vollständigen Anschlagring (2) auszubilden;
Schritt c aufweist: Demontieren der Montagebefestigungsvorrichtung (12), sobald ein Ende des Zapfens in den Anschlagring (2) eintritt.

9. Ein Verfahren zur Demontage der Zapfen- und Muffen-Rohrverbindung nach einem der Ansprüche 1-6 weist die folgenden Demontageschritte auf:
a, Schieben eines Zapfens (8) durch äußere Krafteinwirkung, um einen Zapfenvorsprung (8) des Zapfens (8) zur Dichtungsposition einer Muffe (9) zu bewegen, bis der Zapfenvorsprung (81) vollständig in eine Nut (91) in der Ebene D3 der Muffe geschoben ist,
b, Einsetzen eines Demontagewerkzeugs (16) zwischen zwei Anschläge (1) in die Muffe (9), um den Anschlag (1) zur Innenseite der Muffe (9) zu bewegen, wobei die Lücke zwischen zwei Anschlägen (1) verbreitert und der Innendurchmesser des Anschlagrings (2) ebenfalls vergrößert wird,
c, sobald der Innendurchmesser des Anschlagrings (2) verhindert, dass der Zapfenvorsprung (81) des Zapfens (8) herausgezogen wird, erneutes Einsetzen des Demontagewerkzeugs (16) zwischen zwei weitere benachbarte Anschläge (1), bis der Zapfen (8) leicht aus der Muffe (9) herausgezogen werden kann,
d, nach Herausziehen des Zapfens (8) Entfernen des Demontagewerkzeugs (16) und anschließend nacheinander Entfernen aller Anschläge (1) und eines Gummirings (10) aus der Muffe (9), um letztendlich alle Zubehörteile zu demontieren.

## Revendications

1. Un joint de tuyau à emboîtement comprend un emboîtement femelle (9), un bout mâle (8) et une bague d'arrêt (2), l'extrémité de l'emboîtement femelle (9) s'étendant radialement vers l'intérieur pour former une paroi annulaire (6) complète, une chambre d'arrêt (7) étant formée dans la paroi annulaire (6), une saillie de bout mâle (81) étant prévue au niveau de la surface d'extrémité du bout mâle (8), la bague d'arrêt (2) ayant une structure divisée comprenant une pluralité d'organes d'arrêt (1) et une pluralité de supports élastiques (5), la hauteur totale radiale du support élastique (5) et de l'organe d'arrêt (1) étant égale ou légèrement supérieure à la différence entre le diamètre intérieur maximal de l'emboîtement femelle (9) et le diamètre extérieur du bout mâle (8), **caractérisé en ce qu'**un trou de fixation (4) est prévu dans la surface radialement extérieure de l'organe d'arrêt (1), le support élastique étant installé de manière fixe dans le trou de fixation (4).

2. Le joint de tuyau à emboîtement selon la revendication 1, dans lequel l'organe d'arrêt (1) est formé en tant que barre d'arc et formé radicalement vers l'intérieur en tant que pente de guidage (11) au niveau de l'extrémité extérieure, une rainure (3) étant prévue dans la barre d'arc de l'organe d'arrêt (1), et le trou de fixation (4) étant situé au fond de la rainure.

3. Le joint de tuyau à emboîtement selon la revendication 1, dans lequel la somme de la longueur d'arc d'une pluralité d'organes d'arrêt (1) est égale ou légèrement inférieure à la circonférence du bout mâle.

4. Le joint de tuyau à emboîtement selon la revendication 2, dans lequel deux rainures (3) sont disposées de manière uniforme dans chaque organe d'arrêt (1).

5. Le joint de tuyau à emboîtement selon l'une des revendications 1-4, dans lequel le support élastique (5) a un montant de fixation (53), une base supérieure (51) et une saillie (52) qui s'étend radialement au-delà de la surface du montant de fixation (53) entre le montant de fixation (53) et la base supérieure (51).

6. Le joint de tuyau à emboîtement selon l'une des revendications 1-4, dans lequel les organes d'arrêt sont de préférence 3 ou plus.

7. Un procédé de montage du joint de tuyau à emboîtement selon l'une des revendications 1-6, comprenant les étapes de montage suivantes :
a, nettoyer un emboîtement femelle (9) d'un tuyau, installer une bague d'étanchéité en caoutchouc et appliquer un lubrifiant sur la bague d'étanchéité en caoutchouc ;
b, installer un support élastique (5) dans chaque organe d'arrêt (1) et installer les organes d'arrêt (1) dans une chambre d'arrêt (7) l'un après l'autre afin de former une bague d'arrêt (2) complète ;
c, installer un bout mâle (8) dans l'emboîtement femelle (9) ;
d, mettre le joint en place après qu'une saillie de bout mâle (81) ait traversé la bague d'arrêt (2) le long d'une pente de guidage (11).

8. Le procédé de montage selon la revendication 7, **caractérisé en ce que** :
l'étape b comprend : prévoir un dispositif de montage (12) entre deux organes d'arrêt, respectivement, afin de former une bague d'arrêt (2) complète ;
l'étape c comprend : démonter le dispositif de montage (12) dès qu'une extrémité du bout mâle entre la bague d'arrêt (2).

9. Un procédé de démontage du joint de tuyau à emboîtement selon l'une des revendications 1-6 comprend les étapes de démontage suivantes :
a, pousser un bout mâle (8) par une force externe pour déplacer une saillie de bout mâle (8) du bout mâle (8) vers la position de fermeture étanche d'un emboîtement femelle (9) jusqu'à ce que la saillie de bout mâle (81) soit poussée complètement dans une rainure (91) dans le plan D3 de l'emboîtement femelle,
b, insérer un outil de démontage (16) entre deux organes d'arrêt (1) dans l'emboîtement femelle (9) afin de déplacer l'organe d'arrêt (1) vers l'intérieur de l'emboîtement femelle (9), l'espace entre deux organes d'arrêt (1) étant élargi et le diamètre intérieur de la bague d'arrêt (2) étant également augmenté,
c, dès que le diamètre intérieur de la bague d'arrêt (2) empêche la saillie de bout mâle (81) du bout mâle (8) d'être retirée, insérer l'outil de démontage (16) de nouveau entre deux autres organes d'arrêt (1) adjacents jusqu'à ce que le bout mâle (8) puisse être retiré sans difficulté de l'emboîtement femelle (9),
d, après que le bout mâle (8) soit retiré, enlever l'outil de démontage (16) et ensuite enlever tous les organes d'arrêt (1) et une bague en caoutchouc (10) de l'emboîtement femelle (9) l'un après l'autre afin de démonter finalement tous les accessoires.
